# EUROPÄISCHE PATENTSCHRIFT

(11) **EP 2 068 027 B1**
(45) Veröffentlichungstag und Bekanntmachung des Hinweises auf die Patenterteilung: **27.07.2011**
(21) Anmeldenummer: 08016596.2
(22) Anmeldetag: 20.09.2008
(51) Int. Cl.: F16D 7/08

(54) **Drehmomentbegrenzungskupplung**
Torque limiting coupling
Couplage de limitation du couple

(30) Priorität: 29.11.2007 DE 102007057865
(43) Veröffentlichungstag der Anmeldung: 10.06.2009
(73) Patentinhaber: GKN Walterscheid GmbH, 53797 Lohmar (DE)
(72) Erfinder: Kämpf, Klaus, 53797 Lohmar (DE)
(74) Vertreter: Müller, Thomas Michael

(56) Entgegenhaltungen:
- DE-A1- 10 201 988
- US-A- 3 722 644
- US-A- 4 579 201

## Beschreibung

Die Erfindung betrifft eine Drehmomentbegrenzungskupplung, die um eine Längsachse drehbar angeordnet ist, mit einer Kupplungsnabe, die umfangsverteilte Durchbrüche aufweist, in welchen Mitnehmer parallel zur Längsachse verstellbar gehalten sind, mit einer Kupplungshülse, die zu den Durchbrüchen korrespondierende erste Ausnehmungen aufweist, mit einer Schaltscheibe, die zwischen einer Einschaltstellung und einer Freilaufstellung relativ zur Kupplungsnarbe drehbar angeordnet ist und zu den Durchbrüchen korrespondierende zweite Ausnehmungen aufweist, in welche die Mitnehmer in der Freilaufstellung eingreifen, mit ersten Federmitteln, die die Schaltscheibe in Umfangsrichtung zur Einnahme der Einschaltstellung beaufschlagen, wobei die Schaltscheibe bei Überschreiten eines vorgegebenen Nennmoments durch eine Abrollbewegung der Mitnehmer aus der Einschaltstellung zur Freilaufstellung überführbar ist, wobei die Schaltscheibe zu den Durchbrüchen korrespondierende zweite Ausnehmungen aufweist, in welche die Mitnehmer in der Freilaufstellung eingreifen, und mit ersten Federmitteln, die die Schaltscheibe in Umfangsrichtung zur Schaltstellung beaufschlagen, sowie mit zweiten Federmitteln, die die Schaltscheibe axial beaufschlagen, so dass die Mitnehmer von der Schaltscheibe gegen die Kupplungshülse beaufschlagt werden und in der Einschaltstellung zur Drehmomentübertragung in den ersten Ausnehmungen gehalten sind.

Drehmomentbegrenzungskupplungen sind aus dem Stand der Technik hinlänglich bekannt. Mit diesen können insbesondere kräfte- und/oder drehmomentübertragende Bauteile eines Antriebsstrangs sehr wirkungsvoll vor kritischen Belastungen geschützt werden, indem die Drehmomentbegrenzungskupplungen bei einer Überlast eine Kräfte- beziehungsweise Drehmomentübertragung zwischen einer Antriebsseite und einer Abtriebsseite des Antriebsstrangs reduzieren oder zur Gänze unterbrechen können. Es versteht sich, dass derartige Drehmomentbegrenzungskupplungen vielfältiger Gestalt sein können.

Beispielsweise ist aus der Patentschrift DE 102 01 988 C2 eine gattungsgemäße Drehmomentbegrenzungskupplung bekannt, mittels der ermöglicht wird, bei Auftreten einer Überlast in einem Antriebsstrang mit sich drehenden Bauteilen eine Kräfteund/oder Drehmomentübertragung zu unterbrechen und nach Beseitigung der Überlast anschließend ein automatisches Einschalten der Drehmomentbegrenzungskupplung bei einer geringen Einschaltdrehzahl wieder zu ermöglichen. Ist ein automatisches Einschalten der Drehmomentbegrenzungskupplung nicht erwünscht, ist es selbst bei sehr geringen Drehzahlen möglich, eine Not-Abschaltung der Drehmomentbegrenzungskupplung beizubehalten und ein automatisches Wiedereinschalten der Drehmomentbegrenzungskupplung durch Betätigen einer entsprechenden Sperrklinke zu unterbinden.

Die in der Patentschrift DE 102 01 988 C2 beschriebene Drehmomentbegrenzungskupplung funktioniert drehrichtungsunabhängig, wobei ein automatisches Wiedereinschalten der Drehmomentbegrenzungskupplung bei Reduzierung der Drehzahl erfolgt, unabhängig ob der Antriebsstrang im Vorwärts- oder im Rückwärtslauf betrieben wird.

Es gibt jedoch Anwendungsfälle, bei denen es sinnvoll ist, wenn ein automatisches Wiedereinschalten ausschließlich dann erfolgt, wenn das zu übertragende Drehmoment unter einen bestimmten Wert fällt, unabhängig von der Höhe der Drehzahl.

Aus der DE 103 48 068 A1 ist eine Kupplung zur Drehmomentbegrenzung bekannt, die eine Kupplungsnabe und eine um die Kupplungsnabe abgeordnete Kupplungshülse aufweist. Es sind Mitnehmer vorgesehen, die in einer Drehmomentübertragungsposition die Übertragung vom Drehmoment zwischen der Kupplungsnabe und der Kupplungshülse gewährleisten und in einer Abschalteposition eine Drehmomentübertragung verhindern. Die Mitnehmer sind in Radialbohrungen in der Kupplungsnabe verschiebbar gehalten. Unabhängig von der Drehzahl erfolgt ein Umschalten von der Abschaltposition in die Drehmomentübertragungsposition stets dann, wenn das zu übertragende Drehmoment unter einen bestimmten Wert fällt. Derartige Drehmomentbegrenzungskupplungen werden auch als Ratschen bezeichnet.

US 3 722 644 offenbart eine Drehmomentbegrenzungskupplung, bei der zwischen zwei Kupplungselementen Kugeln einsitzen, die zur Übertragung und zur Begrenzung des Drehmoments vorgesehen sind. Die Kugeln sitzen ferner in Durchbrüchen eines Kugelkäfigs ein. Die Drehmomentbegrenzungskupplung ist derart ausgelegt, dass in beiden Drehrichtungen die Drehmomentübertragung und die Drehmomentbegrenzung in gleicher Weise funktionieren. Es wird ein Anschlag beschrieben, der auf dem Umfang einer Welle angeordnet ist. Dieser Anschlag dient dazu, den Winkelweg des Kugelkäfigs zu begrenzen, wenn sich die beiden Kupplungselemente in ihrem drehmomentbegrenzenden Zustand befinden.

Aufgabe der vorliegenden Erfindung ist es, eine Drehmomentbegrenzungskupplung bereitzustellen, bei der das automatische Wiedereinschalten in der einen Drehrichtung dann erfolgt, wenn die Drehzahl unter einen bestimmten Wert sinkt und bei der ein Wiedereinschalten in der anderen Drehrichtung dann erfolgt, wenn das zu übertragende Drehmoment unter einen bestimmten Wert sinkt.

Diese Aufgabe wird mittels einer eingangs beschriebenen Drehmomentbegrenzungskupplung gelöst, bei der eine Anschlaganordnung vorgesehen ist, die ein Überführen der Schaltscheibe von der Einschaltstellung in die Freilaufstellung in eine erste Drehrichtung ermöglicht und in eine zweite Drehrichtung verhindert.

In Einschaltstellung greifen die Mitnehmer sowohl in die Durchbrüche der Kupplungsnabe als auch in die Ausnehmungen der Kupplungshülse ein, wodurch eine drehfeste Verbindung zwischen Kupplungsnabe und Kupplungshülse hergestellt ist. Dabei werden die Mitnehmer mittels der Schaltscheibe und den zweiten Federmitteln axial in Richtung Kupplungshülse und somit in die ersten Ausnehmungen beaufschlagt. Durch eine an die Kupplungshülse angebrachte Last wird ein entgegenwirkendes Drehmoment auf die Drehmomentbegrenzungskupplung aufgebracht, wodurch ein Scheren von Kupplungsnabe und Kupplungshülse bewirkt wird. Hierdurch werden die Mitnehmer aus den Ausnehmungen in Richtung zur Schaltscheibe gedrängt und fangen an abzurollen, was durch das Verdrehen der Kupplungshülse relativ zur Kupplungsnabe verursacht wird. Bei geringen Drehmomenten unterhalb eines vorgesehenen Abschaltdrehmoments reicht die Federkraft der zweiten Federmittel aus, die Mitnehmer in den ersten Ausnehmungen zu halten. Je höher jedoch das Drehmoment wird, desto größer ist die Kraft die die Mitnehmer aus den ersten Ausnehmungen drängt und bei Überschreiten eines bestimmten Drehmoments werden die Mitnehmer komplett aus den ersten Ausnehmungen gedrängt.

Die Mitnehmer, die aus den ersten Ausnehmungen gedrängt wurden, rollen nun auf der Kupplungshülse und gleichzeitig auf einer Stirnseite der Schaltscheibe ab, wodurch die Schaltscheibe in eine entgegen gesetzte Richtung beaufschlagt wird. Hierdurch bewegt sich die Schaltscheibe relativ zu den Mitnehmern bis schließlich die zweiten Ausnehmungen in Überdeckung mit den Durchbrüchen der Kupplungsnabe sind, so dass die Mitnehmer in die zweiten Ausnehmungen eingreifen können. Nun ist die Freilaufstellung erreicht, in der die Mitnehmer von der axialen Federkraft der zweiten Federmittel entkoppelt sind und nicht mehr in die ersten Ausnehmungen drängen.

Durch das Vorsehen der Anschlaganordnung, die ein Überführen der Schaltscheibe von der Einschaltstellung in die Freilaufstellung in eine zweite Drehrichtung verhindert, wird erreicht, dass beim Betrieb der Drehmomentbegrenzungskupplung in einer Drehrichtung das Überführen der Schaltscheibe von der Einschaltstellung in die Freilaufstellung nicht möglich ist. In diesem Fall können die zweiten Ausnehmungen nicht in axiale Überdeckung mit den Durchbrüchen und somit mit den Mitnehmern geraten, so dass die Mitnehmer zwischen der Schaltscheibe und der Kupplungshülse verbleiben ohne dabei in die zweiten Ausnehmungen der Schaltscheibe einzugreifen. Dadurch, dass ein Eingreifen der Mitnehmer in die zweiten Ausnehmungen der Schaltscheibe nicht erfolgt, bleiben die Mitnehmer unter axialer Beaufschlagung durch die zweiten Federmittel. Dies hat zur Folge, dass die Mitnehmer ständig in die ersten Ausnehmungen der Kupplungshülse beaufschlagt werden, und bei entsprechender Herabsinkung des Drehmomentes in den ersten Ausnehmungen eingreifen und dort verbleiben, so dass eine Drehmomentübertragung zwischen Kupplungsnabe und Kupplungshülse wieder ermöglicht wird. Ein Wiedereingreifen der Mitnehmer in die ersten Ausnehmungen erfolgt dabei unabhängig von der Drehzahl, die an der Drehmomentbegrenzungskupplung anliegt.

Vorzugsweise weist die Anschlaganordnung einen ersten Anschlag und einen zweiten Anschlag auf, die miteinander in Anlage überführbar sind. In der Stellung, in der die beiden Anschläge miteinander in Anlage sind, ist eine Relativverdrehung der mit den Anschlägen verbundenen Bauteile in eine Richtung möglich und in die andere Richtung nicht möglich.

Dabei ist vorzugsweise in der Einschaltstellung der erste Anschlag mit dem zweiten Anschlag in Anlage. Somit ist direkt in der Einschaltstellung gewährleistet, dass eine Verdrehung der Stellscheibe gegenüber der Kupplungsnabe in der einen Richtung unterbunden wird.

Vorzugsweise sind in der Einschaltstellung die zweiten Ausnehmungen zu den Durchbrüchen in Umfangsrichtung um einen ersten Winkel versetzt angeordnet, und in der Freilaufstellung sind die zweiten Ausnehmungen zu den Durchbrüchen in Umfangsrichtung deckungsgleich angeordnet. Das heißt, dass die Schaltscheibe gegenüber der Kupplungsnabe um den ersten Winkel verdreht werden muss, damit die zweiten Ausnehmungen zu den Durchbrüchen in Deckung geraten und somit die Schaltscheibe in Freilaufstellung gerät. Da das Verdrehen der Schaltscheibe gegenüber der Kupplungsnabe wiederum nur in eine Richtung möglich ist, kann die Freilaufstellung auch nur durch Verdrehen in diese Richtung erreicht werden.

In weiterer bevorzugter Ausgestaltung weist die Anschlaganordnung einen dritten und einen vierten Anschlag auf, wobei in der Einschaltstellung der dritte Anschlag zum vierten Anschlag um einen zweiten Winkel umfangsversetzt angeordnet ist, der im wesentlichen dem ersten Winkel entspricht. Der dritte und der vierte Anschlag dienen dabei dafür, dass sich in der Freilaufstellung die Schaltscheibe wiederum nur in Richtung zur Einschaltstellung verdrehen kann. Ein Verdrehen der Schaltscheibe über die Freilaufstellung hinaus wird durch den dritten und den vierten Anschlag unterbunden. Dadurch, dass der dritte Anschlag zum vierten Anschlag um einen Winkel β umfangsversetzt angeordnet ist, der im wesentlichen dem Winkel α entspricht, wird erreicht, dass in der Freilaufstellung der dritte und der vierte Anschlag bereits direkt in Anlage zueinander sind und somit direkt von der Freilaufstellung ein weiteres Verdrehen der Schaltscheibe gegenüber der Kupplungsnabe über die Freilaufstellung hinaus verhindert wird.

Vorzugsweise ist der erste Anschlag der Kupplungsnabe zugeordnet und der zweite Anschlag der Schaltscheibe zugeordnet. Unter zugeordnet ist dabei zu verstehen, dass der erste Anschlag im wesentlichen verdrehfest zur Kupplungsnabe bzw. der zweite Anschlag verdrehfest zur Schaltscheibe gehalten ist, was auch mittelbar über weitere Bauteile erfolgen kann.

In weiterer Ausgestaltung weist die Schaltscheibe den zweiten Anschlag auf, was bedeutet, dass der zweite Anschlag unmittelbar an der Schaltscheibe angeordnet ist. Hierdurch wird ein einfacher Aufbau der Drehmomentbegrenzungskupplung erreicht.

In einer ersten bevorzugten Ausführungsform ist der erste Anschlag in Form einer ersten Anschlagfläche und der zweite Anschlag in Form einer zweiten Anschlagfläche gestaltet, wobei eine Passfeder vorgesehen ist, die mit der Kupplungsnabe drehfest verbunden ist, wobei die Passfeder die erste Anschlagfläche aufweist und wobei die Schaltscheibe an einer Innenumfangsfläche eine Ausnehmung aufweist, die durch die zweite Anschlagfläche begrenzt ist. Die Anschläge sind somit konkret als Anschlagflächen ausgestaltet, wobei im wesentlichen eine Federnutverbindung vorgesehen, bei der die Nut in Umfangsrichtung betrachtet größer ist als die dort einliegende Feder. Die Feder ist somit drehbar innerhalb der Nut gehalten, wobei die beiden Anschlagflächen ausgehend von der Einschaltstellung ein Verdrehen der Schaltscheibe gegenüber der Kupplungsnabe in eine Richtung verhindern.

In einer zweiten bevorzugten Ausführungsform ist ein Druckring zwischen den zweiten Federmitteln und der Schaltscheibe vorgesehen, der mit der Kupplungsnabe drehfest verbunden ist, wobei der Druckring den ersten Anschlag aufweist. Der Druckring wird dabei von den zweiten Federmitteln axial beaufschlagt und beaufschlagt wiederum selbst die Schaltscheibe in Richtung zur Kupplungshülse. Dadurch, dass der Druckring mit der Kupplungsnabe drehfest verbunden ist und den ersten Anschlag aufweist, wird auch hier wiederum ein Verdrehen der Schaltscheibe gegenüber der Kupplungsnabe aus der Einschaltstellung heraus in eine Richtung verhindert.

In bevorzugter Ausgestaltung der zweiten Ausführungsform ist vorgesehen, dass der erste Anschlag in Form einer ersten Anschlagfläche und der zweite Anschlag in Form einer zweiten Anschlagfläche gestaltet ist, wobei der Druckring einen radialen Vorsprung aufweist, an dem die erste Anschlagfläche angeordnet ist, und dass die Schaltscheibe einen axialen Vorsprung aufweist, an dem die zweite Anschlagfläche angeordnet ist. Dabei ragt der axiale Vorsprung in axiale Richtung von der Schaltscheibe hervor und gerät in axiale Überdeckung mit dem Druckring. Der radiale Vorsprung des Druckrings ragt dabei radial über einen Außenumfang des Druckrings hervor, wobei der radiale Vorsprung dabei in Überdeckung zu dem axialen Vorsprung gerät. Hierdurch wird eine Art Verzahnung der beiden Vorsprünge erreicht die je nach dem, ob die Vorsprünge mit ihren jeweiligen Anschlägen in Anlage sind ein Mitnehmen des einen Vorsprungs durch den anderen Vorsprung bewirkt. Äquivalent hierzu können die Vorsprünge auch genau umgekehrt angeordnet sein, nämlich derart, dass der Druckring den axialen Vorsprung und die Stellscheibe den radialen Vorsprung aufweist.

Bevorzugte Ausführungsbeispiele sind anhand der folgenden Zeichnungsfiguren näher erläutert. Hierin zeigt:
Figur 1 eine erfindungsgemäße Drehmomentbegrenzungskupplung in einer ersten Ausführungsform
   a) im Längsschnitt,
   b) im Querschnitt entlang der Schnittlinie I-I gemäß Figur 1a),
   c) im Querschnitt entlang der Schnittlinie II-II gemäß Figur 1a),
   d) in einem zu Figur 1a) um 90° um die Längsachse verdrehten Längsschnitt;
Figur 2 eine Kupplungshülse der Drehmomentbegrenzungskupplung gemäß Figur 1
   a) in Draufsicht,
   b) in Seitenansicht;
Figur 3 eine Kupplungsnabe der Drehmomentbegrenzungskupplung gemäß Figur 1
   a) im Längsschnitt,
   b) in Draufsicht;
Figur 4 eine Schaltscheibe der Drehmomentbegrenzungskupplung gemäß Figur 1
   a) im Längsschnitt,
   b) in Draufsicht;
Figur 5 ein Druckring der Drehmomentbegrenzungskupplung gemäß Figur 1 in Draufsicht;
Figur 6 eine erfindungsgemäße Drehmomentbegrenzungskupplung in einer zweiten Ausführungsform im Querschnitt;
Figur 7 eine schematische Darstellung einer Drehmomentbegrenzungskupplung nach einer voran genannten Ausführungsform bei Betrieb in einer ersten Richtung
   a) in Einschaltstellung,
   b) beim Wechsel von der Einschaltstellung in die Freilaufstellung,
   c) in Freilaufstellung;
Figur 8 eine schematische Skizze der Drehmomentbegrenzungskupplung gemäß Figur 7 bei Betrieb in einer zweiten Richtung
   a) in Einschaltstellung,
   b) beim Wechsel von der Einschaltstellung in die Ratschenstellung,
   c) in Ratschenstellung.

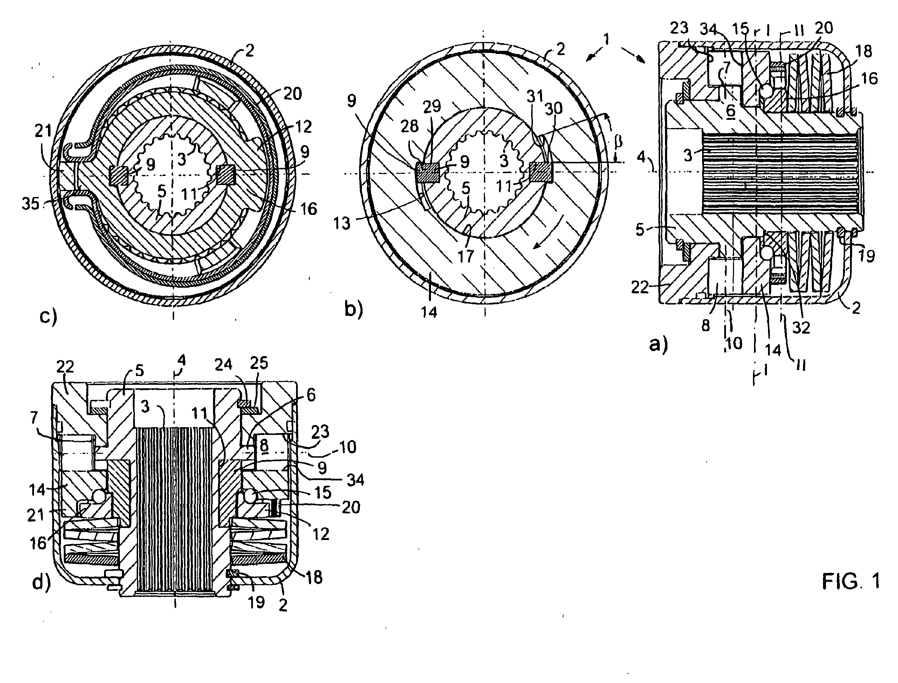

Die Figuren 1 bis 5 werden im folgenden gemeinsam beschrieben..

In Figur 1 ist eine Drehmomentbegrenzungskupplung 1 gezeigt, die eine. Kupplungsnabe 5 aufweist, die auf einen nicht dargesellten Wellenzapfen aufgeschoben werden kann. Die Kupplungsnabe 5 weist zur drehfesten Verbindung mit dem Wellenzapfen eine Innenverzahnung 3 auf. In einem eingeschaltetem Zustand ist die Kupplungsnabe 5 drehfest mit einer Kupplungshülse 22 verbunden, wobei Drehmoment von der Kupplungsnabe 5 auf die Kupplungshülse 22 oder umgekehrt übertragen werden kann. In einem ausgeschalteten Zustand ist die drehfeste Verbindung zwischen Kupplungsnabe 5 und Kupplungshülse 22 unterbrochen, so dass keine Drehmomentübertragung stattfinden kann. Die Drehmomentbegrenzungskupplung 1 und der Wellenzapfen rotieren um eine gemeinsame Längsachse 4. Ein Gehäuse 2 grenzt die Drehmomentbegrenzungskupplung 1 nach außen hin ab.

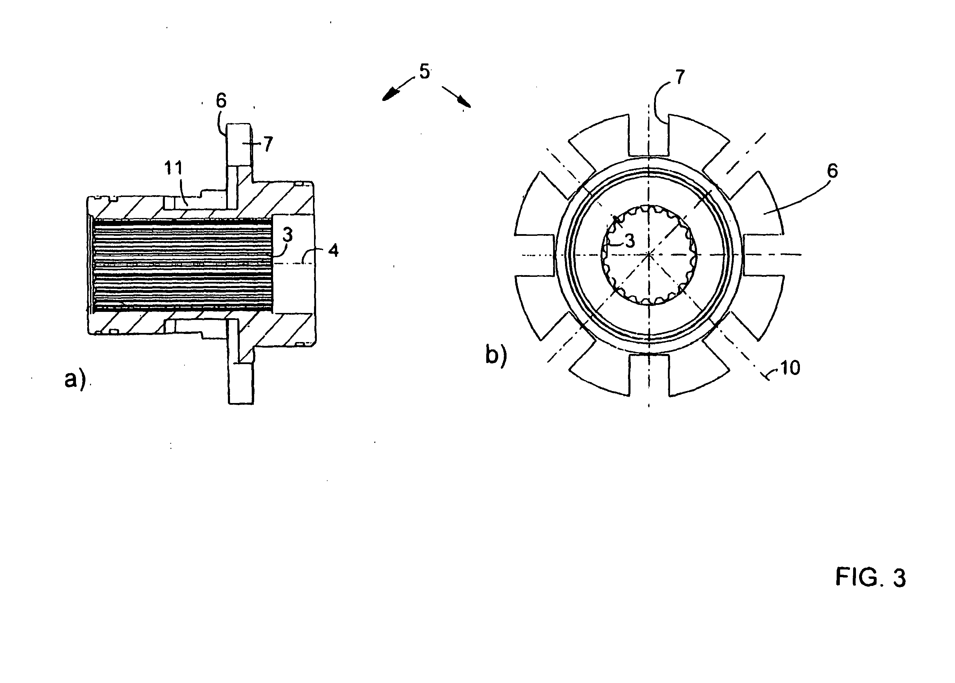

Die Kupplungsnabe 5, die als Einzelheit in Figur 3 zu erkennen ist, bildet radial außen einen konzentrisch umlaufenden Kupplungsflansch 6 aus, in welchem konzentrisch um die Längsachse 4 insgesamt acht Durchbrüche 7 vorgesehen sind. Die Durchbrüche 7 dienen zur Aufnahme von jeweils einem Mitnehmer 8. Die Mitnehmer 8 sind in diesem Ausführungsbeispiel als zylindrische Rollen ausgebildet, wobei auch kegelige Rollen oder Kugeln verwendet werden können. Die Mitnehmer 8 sind jeweils um eine Mitnehmerdrehachse 10 drehbar innerhalb der Durchbrüche 7 gelagert, wobei die Mitnehmerdrehachsen 10 sternförmig zur Längsachse 4 angeordnet sind und diese schneiden. In eingeschaltetem Zustand greifen die Mitnehmer 8 zusätzlich in erste Ausnehmungen 23 der Kupplungshülse 22 ein.

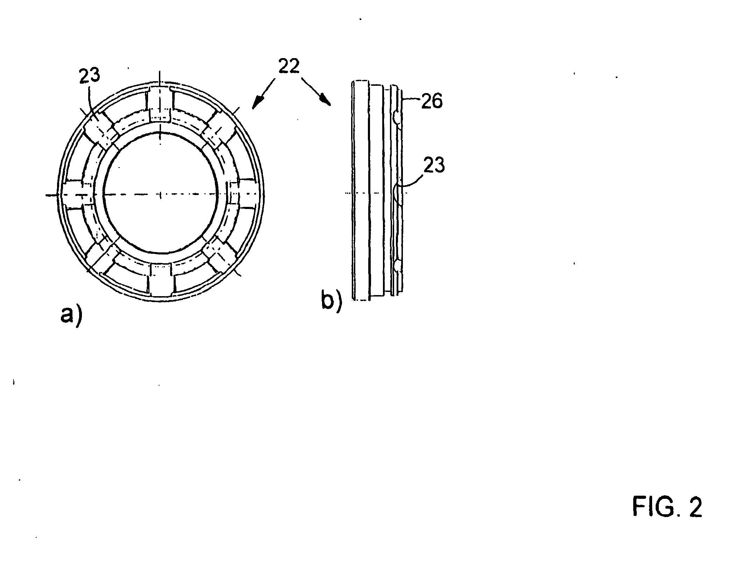

Die Kupplungshülse 22 mit ihren ersten Ausnehmungen 23 ist als Einzelheit in Figur 2 zu erkennen. Die ersten Ausnehmungen 23 sind an einer Stirnseite 26 der Kupplungshülse 22 angeordnet. Es sind insgesamt acht erste Ausnehmungen 23 vorgesehen, die in eingeschaltetem Zustand mit den Durchbrüchen 7 fluchtend angeordnet sind. Dadurch, dass die Mitnehmer 8 in der Einschaltstellung sowohl in die Durchbrüche 7 der Kupplungsnabe 5 als auch in die ersten Ausnehmungen 23 der Kupplungshülse 22 eingreifen, ist eine drehmomentübertragende Verbindung über die Mitnehmer 8 zwischen der Kupplungsnabe 5 und der Kupplungshülse 22 hergestellt. Die Kupplungshülse 22 kann über geeignete Mittel drehfest mit einem Anschlussbauteil verbunden werden.

Es sind zweite Federmittel in Form eines Tellerfederpaketes 18 vorgesehen, die einerseits axial gegen einen Stützring 19 und andererseits über einen Druckring 16 gegen eine Schaltscheibe 14 abgestützt sind. Der Druckring 16 ist drehfest und axial verschiebbar auf der Kupplungsnabe 5 gehalten. Die Schaltscheibe 14 ist drehbar und axial verschiebbar zur Kupplungsnabe 5 gehalten. Um Relativdrehbewegungen der Schaltscheibe 14 zum Druckring 16 zu ermöglichen, ist zwischen der Schaltscheibe 14 und dem Druckring 16 ein Drucklager 15 in Form einer Wälzlagerung vorgesehen.

Der Stützring 19 in Form eines Sicherungsrings ist fest mit der Kupplungsnabe 5 verbunden, so dass das Tellerfederpaket 18 die Schaltscheibe 14 in Richtung zur Kupplungshülse 22 mit Kraft beaufschlagt.

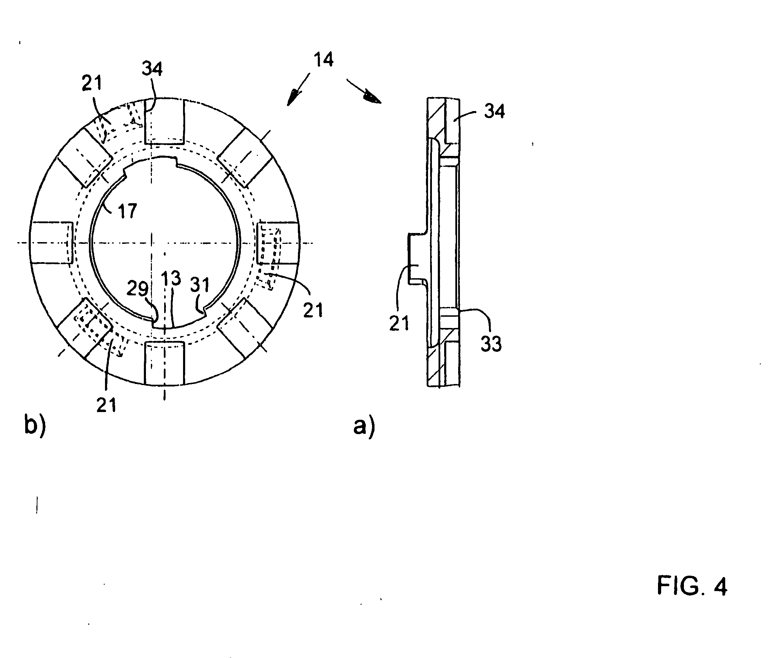

Die Schaltscheibe 14 ist im wesentlichen ringförmig gestaltet und weist, wie aus Figur 4 ersichtlich, an einer Stirnseite 33 acht umfangsverteilte zweite Ausnehmungen 34 auf, in die die Mitnehmer 8 in einer Freilaufstellung eingreifen können. An einer Innenumfangsfläche 17 weist die Schaltscheibe 14 zwei diametral gegenüberliegende Ausnehmungen 13 auf. Es sind mehrere umfangsverteilte axiale Vorsprünge 21 vorgesehen, die zum einen zur radialen Führung eines Spannklemmenpaketes 20 dienen und zum anderen einen Anschlag für das Spannklemmenpaket 20 bilden, wie es aus Figur 1c) zu erkennen ist.

Erste Federmittel in Form des Spannklemmenpaketes 20 stützen sich derart sowohl gegen den Druckring 16 als auch gegen die Schaltscheibe 14 in Umfangsrichtung ab, dass die Schaltscheibe 14 zur Einnahme ihrer Einschaltstellung beaufschlagt ist. Es wird erreicht, dass die Kupplungsnabe 5 und die Schaltscheibe 14 stets in eine relative Position zueinander streben, die der Einschaltstellung, wie sie insbesondere in den Figuren 1b) und 1c) zu erkennen ist, entspricht.

Wie in Figur 1c) gezeigt ist die Kupplungsnabe 5 mit dem Druckring 16 über zwei Passfedern 9 drehfest verbunden. Die Passfedern 9 greifen zugleich auch in die Ausnehmungen 13 der Schaltscheibe 14 ein. Es ist aus Figur 1b) zu erkennen, dass die Ausnehmungen 13 in Umfangsrichtung betrachtet länger sind als die Passfedern 9, so dass eine Relativverdrehung zwischen Passfedern 9, die drehfest mit der Kupplungsnabe 5 verbunden sind, und der Schaltscheibe 14 möglich ist. Es ist auch zu erkennen, dass die Passfedern 9 in der Einschaltstellung jeweils mit einer ersten Anschlagfläche 28 an einer zweiten Anschlagfläche 29 der Schaltscheibe 14 in Anlage sind. Somit ist nur ein Verdrehen der Schaltscheibe 14 gegenüber der Kupplungsnabe 5 in einer Richtung möglich, was durch den in Uhrzeigersinn weisenden Pfeil in Figur 1b) dargestellt ist. Es ist ferner zu erkennen, dass jede Passfeder 9 eine dritte Anschlagfläche 30 aufweist, die mit einer vierten Anschlagfläche 31 der Schaltscheibe 14 in Anlage gebracht werden kann. Die vierte Anschlagfläche 31 ist jedoch zur dritten Anschlagfläche 30 um einen zweiten Winkel β umfangsversetzt angeordnet, so dass die Schaltscheibe 14 gegenüber der Passfeder 9 und somit gegenüber der Kupplungsnabe 5 um den zweiten Winkel β verdreht werden muss, bevor die dritte Anschlagfläche 30 mit der vierten Anschlagfläche 31 in Anlage geraten kann. Wie später noch erläutert wird, entspricht der zweite Winkel β dem Winkel, um den die die Schaltscheibe 14 ausgelenkt wird um von der Einschaltstellung in die Freilaufstellung überführt zu werden.

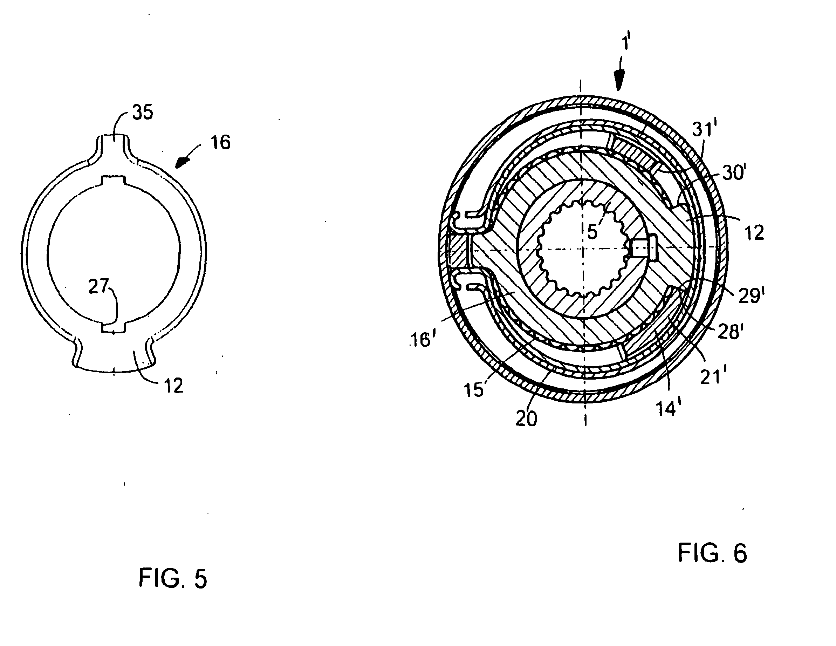

In Figur 5 ist der Druckring 16 als Einzelheit dargestellt. Der Druckring 16 ist im wesentlichen ringförmig gestaltet und weist einen radialen Vorsprung 12 sowie einen hierzu diametral gegenüberliegenden weiteren radialen Vorsprung 35 auf. Der radiale Vorsprung 12 dient, wie zum Beispiel aus Figur 1c) ersichtlich, zur radialen Führung des Spannklemmenpaketes 20. Der radiale Vorsprung 35 dient als Anlagefläche für das Spannklemmenpaket 20 und somit zur Ausrichtung des Druckrings 16 gegenüber der Schaltscheibe 14, was aus Figur 1c) zu erkennen ist. An einer Innenumfangsfläche des Druckrings 16 sind zwei Ausnehmungen 27 vorgesehen, in die die Passfedern 9 zur drehfesten Verbindung mit der Kupplungsnabe 5 eingreifen können.

In Figur 6 ist eine Drehmomentbegrenzungskupplung 1' in einer zweiten Ausführungsform dargestellt. Die Darstellung erfolgt in einem Querschnitt, der der Querschnittsdarstellung aus Figur 1c) entspricht. Im folgenden wird nur auf die Unterschiede eingegangen, wobei gleiche Bauteile mit gleichen Bezugszeichen und unterschiedliche Bauteile mit gestrichenen Bezugszeichen versehen sind.

In dieser zweiten Ausführungsform sind die Anschläge nicht durch Passfedern in der Kupplungsnabe und Ausnehmungen in der Schaltscheibe realisiert, sondern mittels des Druckrings und der Schaltscheibe. Es wird ein Druckring 16' verwendet, der dem Druckring 16 aus der ersten Ausführungsform wie er in der Figur 5 gezeigt ist, in weiten Teilen entspricht. Die Anschlagflächen 28', 30' sind in dieser Ausführungsform zu beiden Seiten des radialen Vorsprungs 12 angeordnet.

Der zweite Anschlag 29' und der vierte Anschlag 31' sind an den axialen Vorsprüngen 21' der Schaltscheibe 14' angeordnet. Es ist zu erkennen, dass der dritte Anschlag 30' und der vierte Anschlag 31' einen Abstand zueinander aufweisen, so dass es möglich ist, den Druckring 16' gegenüber der Schaltscheibe 14' in eine Richtung zu verdrehen. Gleichzeitig ist zur erkennen, dass der erste Anschlag 28' mit dem zweiten Anschlag 29' bereits in Anlage ist, so dass ein Verdrehen in die andere Richtung nicht möglich ist.

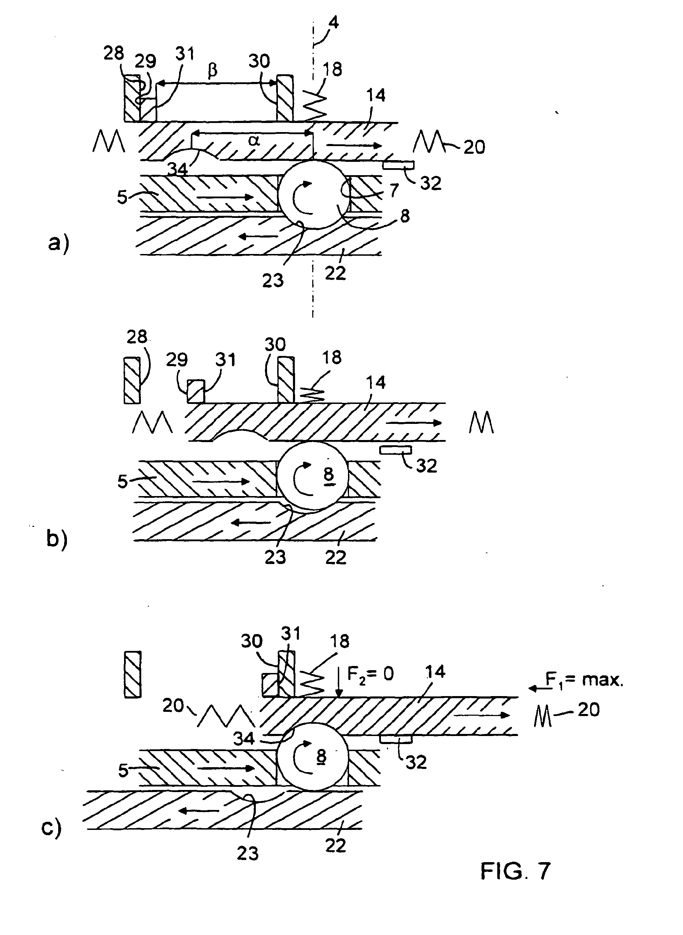

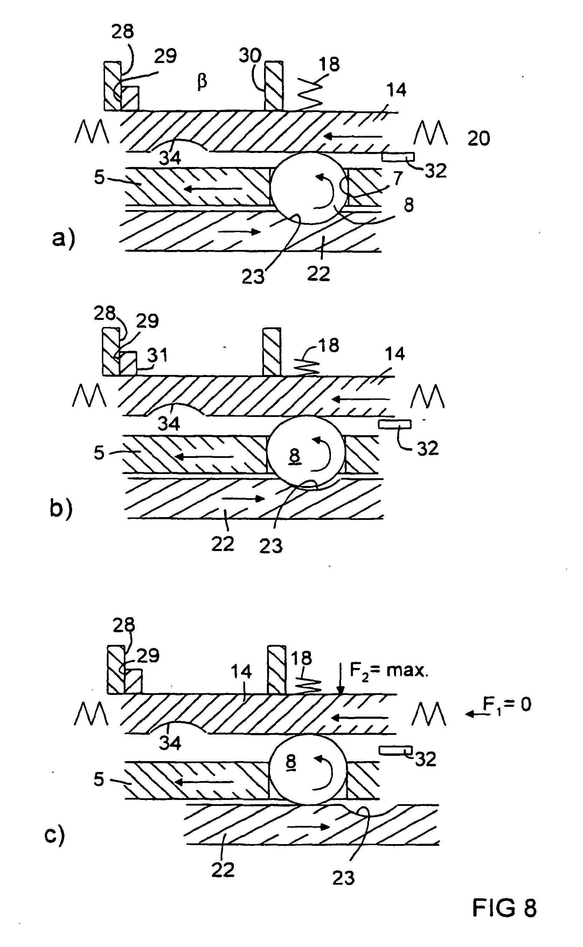

Die Funktionsweise der gezeigten Drehmomentbegrenzungskupplungen wird anhand der schematischen Darstellungen der Figuren 7 und 8 deutlich, in der die Kupplungshülse 22, die Kupplungsnabe 5 und die Schaltscheibe 14 in einer Abwicklung dargestellt sind. Die hier dargestellte Funktionsweise ist für beide Ausführungsformen gültig. Stellvertretend für beide Ausführungsformen werden nur ungestrichene Bezugszeichen verwendet.

Die Anschläge 28, 29, 30, 31 sind hier schematisch dargestellt, wobei die verdrehfeste Verbindung der Anschläge entweder mit der Kupplungsnabe 5 oder mit der Schaltscheibe 14 durch die gleichartige Schattierung dargestellt ist. Das heißt, dass der erste und dritte Anschlag 28, 30 verdrehfest mit der Kupplungsnabe 5 und der zweite und der vierte Anschlag 29, 31 verdrehfest mit der Schaltscheibe 14 verbunden sind. Die ersten und zweiten Federmittel 20, 18 sind ebenfalls nur schematisch dargestellt.

In den Figuren 7a, 8a, 8b und 8c sind die zweiten Ausnehmungen 34 der Schaltscheibe 14 gegenüber den Durchbrüchen 7 der Kupplungsnabe 5 um den ersten Winkel α verdreht angeordnet, was der Einschaltstellung der Schaltscheibe 14 entspricht. Die ersten Federmittel 20 halten dabei die Schaltscheibe 14 relativ zur Kupplungsnabe 5 in der Einschaltstellung. In Figur 7c) ist die Freilaufstellung gezeigt, bei der die Schaltscheibe 14 gegenüber der Einschaltstellung um den ersten Winkel α nach rechts verdreht wurde. In dieser Position beaufschlagen die ersten Federmittel 20 die Schaltscheibe 14 mit einer Kraft F₁ zurück in die Einschaltstellung.

In der in Figur 7a) gezeigten Einschaltstellung greifen die Mitnehmer 8, die in den Durchbrüchen 7 aufgenommen sind, in die ersten Ausnehmungen 23 der Kupplungshülse 22 ein. Die Kupplungsnabe 5 und die Schaltscheibe 14 laufen gemeinsam um die Längsachse 4, was durch die beiden nach rechts weisenden Pfeile gekennzeichnet ist. Durch den drehmomentübertragenden Eingriff der Mitnehmer 8 in die Durchbrüche 7 und in die ersten Ausnehmungen 23 dreht sich auch die Kupplungshülse 22 nach rechts im gleichen Sinn wie die Kupplungsnabe 5 und die Schaltscheibe 14. Jedoch ist an der Kupplungshülse 22 eine Last angebracht, die ein entgegenwirkendes Drehmoment auf die Begrenzungskupplung aufbringt, was durch den nach links weisenden Pfeil dargestellt ist. Durch das Scheren von Kupplungsnabe 5 und Kupplungshülse 22 wirkt eine Kraft auf die Mitnehmer 8, die die Mitnehmer 8 aus den ersten Ausnehmungen 23 in Richtung zur Schaltscheibe 14 drängt, was aus Figur 7b) ersichtlich ist. Durch das Hinausdrängen der Mitnehmer 8 aus den ersten Ausnehmungen 23 werden die Mitnehmer 8 in Richtung zur Schaltscheibe 14 beaufschlagt und fangen an, im Uhrzeigersinn abzurollen, was durch das Verdrehen der Kupplungshülse 22 relativ zur Kupplungsnabe 5 verursacht wird. Ist das Drehmoment gering oder im Bereich unterhalb eines vorgegebenen maximalen Abschaltdrehmoments, dem Nennmoment, reicht die Federkraft F₂ der zweiten Federmittel 18 aus, die Mitnehmer 8 in den ersten Ausnehmungen 23 zu halten. Je höher das Drehmoment jedoch wird, desto größer ist die Kraft, die die Mitnehmer 8 aus den ersten Ausnehmungen 23 drängt. Überschreitet das zu übertragende Drehmoment das Nennmoment, werden die Mitnehmer 8 komplett aus den ersten Ausnehmungen 23 gedrängt, wie aus Figur 7c) zu erkennen ist.

Die Mitnehmer 8 rollen nun auf der Kupplungshülse 22 ab. Gleichzeitig rollen die Mitnehmer 8 auf der Stirnseite 33 der Schaltscheibe 14 ab, und verursachen durch die Abrollbewegung, dass die Schaltscheibe 14 nach rechts beaufschlagt wird, was durch den rechtsweisenden Pfeil auf der Schaltscheibe 14 gekennzeichnet ist. Dabei wird die Schaltscheibe 14 so lange gegenüber der Kupplungshülse 5 nach rechts verdreht, bis die zweiten Ausnehmungen 34 in Überdeckung mit den Durchbrüchen 7 sind. Sind die zweiten Ausnehmungen 34 mit den Durchbrüchen 7 in Überdeckung, können die Mitnehmer 8 in die zweiten Ausnehmungen 34 einsinken.

Wenn die Mitnehmer 8 in die zweiten Ausnehmungen 34 einsinken, können sich die zweiten Federmittel 18 wieder entspannen, wobei die Schaltscheibe 14 mit dem axialen Anschlag 32 in Kontakt gerät. Die Mitnehmer 8 sind dann nicht mehr durch die zweiten Federmittel 18 beaufschlagt und streben somit auch nicht mehr mit großer Kraft in die ersten Ausnehmungen 23. Erst wenn die Umlaufgeschwindigkeit der Kupplungsnabe unter einen gewissen Wert sinkt, reicht die Federkraft F₁ der radial wirkenden ersten Federmittel 20 aus, um die Mitnehmer 8 aus den zweiten Ausnehmungen 34 zu drücken und wieder in die ersten Ausnehmungen 23 zu befördern. Ein Wiedereinschalten der Kupplung erfolgt also drehzahlabhängig. Ein Wiedereinschalten allein durch Herabsinken des Drehmoments ist nicht möglich.

Aus Figur 7c) ist ferner zu erkennen, dass der dritte und der vierte Anschlag 30, 31 in der Freilaufstellung miteinander in Anlage sind. Hierdurch wird erreicht, dass ein Verdrehen der Schaltscheibe 14 gegenüber der Kupplungsnabe 5 über die Freilaufstellung hinaus nicht möglich ist. Ein Überspannen der ersten Federmittel 20 wird so vermieden. Es ist in Figur 7a) zu erkennen, dass der dritte und der vierte Anschlag 30, 31 um den zweiten Winkel β umfangsversetzt zueinander angeordnet sind. In Figur 7c), in der die Schaltscheibe 14 um den ersten Winkel α gegenüber der Kupplungshülse 5 verdreht wurde, sind die Anschläge 30, 31 miteinander in Anlage. Um zu erreichen, dass in der Freilaufstellung der dritte mit dem vierten Anschlag 30, 31 in Anlage ist, entspricht der zweite Winkel β dem ersten Winkel α.

Figur 8 zeigt die gleiche Anordnung wie in Figur 7, jedoch bei Betrieb in der zweiten Drehrichtung, die entgegengesetzt zur ersten Drehrichtung ist. Steigt hier das Drehmoment an, werden die Mitnehmer 8 ebenfalls aus den ersten Ausnehmungen 23 in Richtung zur Schaltscheibe 14 beaufschlagt, wobei die Mitnehmer 8 im Gegenuhrzeigersinn rollen. Durch die Abrollbewegung der Mitnehmer 8 im Gegenuhrzeigersinn wird die Schaltscheibe 14 nach links beaufschlagt, was durch den linksweisenden Pfeil in Figur 7b) gekennzeichnet ist. Ein Verdrehen der Schaltscheibe 14 nach links ist jedoch nicht möglich, Anschläge 28, 29 bereits miteinander in Anlage sind. Durch die Anschläge 28, 29 wird somit verhindert, dass bei Betrieb in der zweiten Drehrichtung die Schaltscheibe 14 in die Freilaufstellung überführbar ist. Zugleich versucht die Kupplungshülse 22 gegenüber der Kupplungsnabe 5 nach rechts zu wandern, was nur dann gelingt, wenn das Drehmoment das Nennmoment überschreitet, so dass die Federkraft F₂ der zweiten Federmittel 18 überwunden werden kann, wie es aus Figur 8c) zu erkennen ist.

Die Mitnehmer 8 geraten nun, wie in Figur 8c) zu erkennen, in eine Ratschenposition zwischen die Schaltscheibe 14 und die Kupplungshülse 22 und sind ständig über die zweiten Federmittel 18 axial beaufschlagt, was dadurch zu erkennen ist, dass die Schaltscheibe 14 nicht in Anlage zum axialen Anschlag 32 ist. D. h. die zweiten Federmittel 18 wirken nun permanent auf die Mitnehmer 8. In dieser Zwischenposition sind die Kupplungsnabe 5 und die Kupplungshülse 22 frei gegeneinander verdrehbar. Geraten die Mitnehmer 8 nun in Überdeckung mit den ersten Ausnehmungen 23, versuchen die Mitnehmer 8 in die ersten Ausnehmungen 23 einzusinken. Ist jedoch das wirkende Drehmoment zu hoch, werden die Mitnehmer sofort wieder aus den ersten Ausnehmungen 23 herausgedrückt. Erst wenn das Drehmoment einen gewissen Wert unterschritten hat, reicht die Federkraft F₂ der zweiten Federmittel 18 aus, die Mitnehmer 8 dauerhaft in den ersten Ausnehmungen 23 zu halten, so dass eine Drehmomentübertragung zwischen Kupplungsnabe 5 und Kupplungshülse 22 möglich ist. Ein Wiedereinschalten erfolgt also in der zweiten Drehrichtung bei Unterschreitung des Nennmoments, unabhängig von der anliegenden Drehzahl. Durch das immerwährende Hinein- und Herausdrücken der Mitnehmer 8 aus den ersten Ausnehmungen 23 entsteht das für Kupplungsratschen typische ratternde Geräusch.

Ein Vergleich der Figuren 7c) und 8c) verdeutlicht die Unterschiede zwischen dem ausgeschalteten Zustand in der einen Drehrichtung und dem ausgeschalteten Zustand in der anderen Drehrichtung.

In Figur 7c) befindet sich die Schaltscheibe 14 in Freilaufstellung, wobei die zweiten Ausnehmungen 34 in radialer Überdeckung zu den Durchbrüchen 7 sind. Die Mitnehmer 8 können so in die zweiten Ausnehmungen 34 einsinken, und die Schaltscheibe 14, beaufschlagt durch die zweiten Federmittel 18 kann sich in Richtung Kupplungshülse verschieben und am axialen Anschlag 32 abstützen. Die Mitnehmer 8 werden in dieser Position nicht mehr über die zweiten Federmittel 18 beaufschlagt.

Anders ist es in Figur 8c). Hier ist zu erkennen, dass die zweiten Federmittel 18 gespannt sind und eine maximale Kraft F₂ aufbringen. Die Schaltscheibe 14 ist hierbei nicht in Anlage zum axialen Anschlag 32, so dass die Kraft F₂ der zweiten Federmittel 18 auf die Mitnehmer 8 wirkt. Die Mitnehmer 8 versuchen somit ständig in die ersten Ausnehmungen 23 der Kupplungshülse einzugreifen, wenn sie in Überlagerung zu diesen geraten.

### Bezugszeichenliste

- 1: Drehmomentbegrenzungskupplung
- 2: Gehäuse
- 3: Innenverzahnung
- 4: Längsachse
- 5: Kupplungsnabe
- 6: Kupplungsflansch
- 7: Durchbrüche
- 8: Mitnehmer
- 9: Passfeder
- 10: Mitnehmerdrehachse
- 11: Nut
- 12: radialer Vorsprung
- 13: Ausnehmung
- 14: Schaltscheibe
- 15: Drucklager
- 16: Druckring
- 17: Innenumfangsfläche
- 18: Tellerfederpaket
- 19: Stützring
- 20: Spannklemmenpaket
- 21: axialer Vorsprung
- 22: Kupplungshülse
- 23: erste Ausnehmungen
- 26: Stirnseite
- 27: Ausnehmung
- 28: erste Anschlagfläche
- 29: zweite Anschlagfläche
- 30: dritte Anschlagfläche
- 31: vierte Anschlagfläche
- 32: axialer Anschlag
- 33: Stirnseite
- 34: zweite Ausnehmung
- 35: radialer Vorsprung

- F: Federkraft

## Patentansprüche

1. Drehmomentbegrenzungskupplung, die um eine Längsachse (4) drehbar angeordnet ist, umfassend
eine Kupplungsnabe (5), die umfangsverteilte Durchbrüche (7) aufweist, in welchen Mitnehmer (8) parallel zur Längsachse (4) verstellbar gehalten sind,
eine Kupplungshülse (22), die zu den Durchbrüchen (7) korrespondierende erste Ausnehmungen (23) aufweist,
eine Schaltscheibe (14, 14'), die zwischen einer Einschaltstellung und einer Freilaufstellung relativ zur Kupplungsnabe (5) drehbar angeordnet ist und zu den Durchbrüchen (7) korrespondierende zweite Ausnehmungen (34) aufweist, in welche die Mitnehmer (8) in der Freilaufstellung eingreifen,
erste Federmittel (20), die die Schaltscheibe (14, 14') in Umfangsrichtung zur Einnahme der Einschaltstellung beaufschlagen, wobei die Schaltscheibe (14, 14') bei Überschreiten eines vorgegebenen Nennmoments durch eine Abrollbewegung der Mitnehmer (8) aus der Einschaltstellung zur Freilaufstellung überführbar ist, sowie
zweite Federmittel (18), die die Schaltscheibe (14, 14') axial beaufschlagen, so dass die Mitnehmer (8) von der Schaltscheibe (14, 14') gegen die Kupplungshülse (22) beaufschlagt werden und in der Einschaltstellung zur Drehmoment-übertragung in den ersten Ausnehmungen (23) gehalten sind,
**dadurch gekennzeichnet,**
**dass** eine Anschlaganordnung (28, 28', 29, 29', 30, 30', 31, 31') vorgesehen ist,
die ein Überführen der Schaltscheibe (14, 14') von der Einschaltstellung in die Freilaufstellung in eine erste Drehrichtung ermöglicht und in eine zweite Drehrichtung verhindert.

2. Drehmomentbegrenzungskupplung nach Anspruch 1,
**dadurch gekennzeichnet,**
**dass** die Anschlaganordnung einen ersten Anschlag (28, 28') und einen zweiten Anschlag (29, 29') aufweist, die miteinander in Anlage überführbar sind.

3. Drehmomentbegrenzungskupplung nach Anspruch 2,
**dadurch gekennzeichnet,**
**dass** in der Einschaltstellung der erste Anschlag (28, 28') mit dem zweiten Anschlag (29, 29') in Anlage ist.

4. Drehmomentbegrenzungskupplung nach einem der Ansprüche 1 bis 3,
**dadurch gekennzeichnet,**
**dass** in der Einschaltstellung die zweiten Ausnehmungen (34) zu den Durchbrüchen (7) in Umfangsrichtung um einen ersten Winkel (α) versetzt angeordnet sind, und
**dass** in der Freilaufstellung die zweiten Ausnehmungen (34) zu den Durchbrüchen (7) in Umfangsrichtung deckungsgleich angeordnet sind.

5. Drehmomentbegrenzungskupplung nach Anspruch 4,
**dadurch gekennzeichnet,**
**dass** die Anschlaganordnung einen dritten Anschlag (30, 30') und einen vierten Anschlag (31, 31') aufweist,
wobei in der Einschaltstellung der dritte Anschlag (30, 30') zum vierten Anschlag (31, 31') um einen zweiten Winkel (β) umfangsversetzt angeordnet ist, der im wesentlichen dem ersten Winkel (α) entspricht.

6. Drehmomentbegrenzungskupplung nach einem der Ansprüche 1 bis 5,
**dadurch gekennzeichnet,**
**dass** der erste Anschlag (28, 28') der Kupplungsnabe (5) zugeordnet ist und der zweite Anschlag (29, 29') der Schaltscheibe (14, 14') zugeordnet ist.

7. Drehmomentbegrenzungskupplung nach Anspruch 6,
**dadurch gekennzeichnet,**
**dass** die Schaltscheibe (14, 14') den zweiten Anschlag (29, 29') aufweist

8. Drehmomentbegrenzungskupplung nach einem der Ansprüche 6 oder 7,
**dadurch gekennzeichnet,**
**dass** der erste Anschlag in Form einer ersten Anschlagfläche (28) und der zweite Anschlag in Form einer zweiten Anschlagfläche (29) gestaltet ist, und dass eine Passfeder (9) vorgesehen ist, die mit der Kupplungsnabe (5) drehfest verbunden ist, wobei die Passfeder (9) die erste Anschlagfläche (28) aufweist,
wobei die Schaltscheibe (14) an einer Innenumfangsfläche (17) eine Ausnehmung (13) aufweist, die durch die zweite Anschlagfläche (29) begrenzt ist.

9. Drehmomentbegrenzungskupplung nach Anspruch 6,
**dadurch gekennzeichnet,**
**dass** ein Druckring (16') zwischen den zweiten Federmitteln (18) und der Schaltscheibe (14') vorgesehen ist, der mit der Kupplungsnabe (5) drehfest verbunden ist,
wobei der Druckring (16') den ersten Anschlag (28') aufweist.

10. Drehmomentbegrenzungskupplung nach Anspruch 9,
**dadurch gekennzeichnet,**
**dass** der erste Anschlag in Form einer ersten Anschlagfläche (28') und der zweite Anschlag in Form einer zweiten Anschlagfläche (29') gestaltet ist, und dass der Druckring (16') einen radialen Vorsprung (12') aufweist, an dem die erste Anschlagfläche (28') angeordnet ist, und
**dass** die Schaltscheibe (14') einen axialen Vorsprung (21') aufweist, an dem die zweite Anschlagfläche (29') angeordnet ist.

## Claims

1. A torque limiting coupling which is arranged so as to be rotatable around a longitudinal axis (4) and which comprises
a coupling hub (5) which comprises circumferentially distributed apertures (7) in which driving dogs (8) are held so as to be adjustable in parallel to the longitudinal axis (4);
a coupling sleeve (22) which comprises first recesses (23) corresponding to the apertures (7);
a switching disc (14, 14') which is arranged between a switched-in position and a freewheeling position so as to be rotatable relative to the coupling hub (5) and which comprises second recesses (34) which correspond to the apertures (7) and into which second recesses (34) the driving dogs (8) engage; first spring means (20) which load the switching disc (14, 14') in the circumferential direction towards assuming the switched-in position, wherein the switching disc (14, 14'), when exceeding a predetermined nominal torque, can be transferred from the switched-in position into the freewheeling position as a result of a rolling movement of the driving dogs (8); as well as second spring means (18) which axially load the switching disc (14, 14'), so that the driving dogs (8) are loaded by the switching disc (14, 14') against the coupling sleeve (22) and are held in the switched-in position in the first recesses (23) for torque transmitting purposes,
**characterised in**
**that** there is provided a stop assembly (28, 28', 29, 29', 30, 30', 31, 31') which permits the switching disc (14, 14') to be transferred from the switched-in position into the freewheeling position in a first direction of rotation and prevents a transfer of same in a second direction of rotation.

2. A torque limiting coupling according to claim 1,
**characterised in**
**that** the stop assembly comprises a first stop (28, 28') and a second stop (29, 29') which can be transferred into contact with one another.

3. A torque limiting coupling according to claim 2,
**characterised in**
**that**, in the switched-in position, the first stop (28, 28') is in contact with the second stop (29, 29').

4. A torque limiting coupling according to any one of claims 1 to 3,
**characterised in**
**that**, in the switched-in position, the second recesses (34) are arranged relative to the apertures (7) so as to be circumferentially offset by a first angle (α) and
**that**, in the freewheeling position, the second recesses (34) are arranged relative to the apertures (7) so as to be congruent with same.

5. A torque limiting coupling according to claim 4,
**characterised in**
**that** the stop assembly comprises a third stop (30, 30') and a fourth stop (31, 31'),
wherein in the switched-in position, the third stop (30, 30') is arranged relative to the fourth stop (31, 31') so as to be circumferentially offset by a second angle (β) which substantially corresponds to the first angle (α).

6. A torque limiting coupling according to any one of claims 1 to 5,
**characterised in**
**that** the first stop (28, 28') is associated with the coupling hub (5) and the second stop (29, 29') is associated with the switching disc (14, 14').

7. A torque limiting coupling according to claim 6,
**characterised in**
**that** the switching disc (14, 14') comprises the second stop (29, 29').

8. A torque limiting coupling according to any one of claims 6 or 7,
**characterised in**
**that** the first stop is provided in the form of a first stop face (28) and the second stop in the form of a second stop face (29) and that there is provided an adjustment spring (9) which is connected to the coupling hub (5) in a rotationally fast way, wherein the adjustment spring (9) comprises the first stop face (28), wherein, at an inner circumferential face (17), the switching disc (14) comprises a recess (13) which is delimited by the second stop face (29).

9. A torque limiting coupling according to claim 6,
**characterised in**
**that** a pressure ring (16') is arranged between die second spring means (18) and the switching disc (14') and is connected to the coupling hub (5) in a rotationally fast way, wherein the pressure ring (16') comprises the first stop (28').

10. A torque limiting coupling according to claim 9,
**characterised in**
**that** the first stop is provided in the form of a first stop face (28') and the second stop in the form of a second stop face (29') and that the pressure ring (16') comprises a radial projection (12') at which there is arranged the first stop face (28'), and that the switching disc (14') comprises an axial projection (21') at which there is arranged the second stop face (29').

## Revendications

1. Accouplement de limitation de couple, qui est disposé de façon à pouvoir tourner autour d'un axe longitudinal (4), comprenant
un moyeu d'accouplement (5), qui présente des percements (7) répartis sur le pourtour, dans lesquels des entraîneurs (8) sont maintenus de façon à pouvoir se déplacer parallèlement à l'axe longitudinal (4),
un manchon d'accouplement (22), qui présente des premiers évidements (23) correspondant aux percements (7),
un disque de commutation (14, 14'), qui est disposé entre une position d'enclenchement et une position de course libre de façon à pouvoir tourner par rapport au moyeu d'accouplement (5) et présente des seconds évidements (34) correspondant aux percements (7), évidements dans lesquels les entraîneurs (8) s'engagent dans la position de course libre,
des premiers moyens à ressort (20), qui sollicitent le disque de commutation (14, 14') dans le sens périphérique pour occuper la position d'enclenchement, le disque de commutation (14, 14') pouvant être transféré, en cas de dépassement d'un moment nominal prédéfini, par un mouvement de déroulement des entraîneurs (8) de la position d'enclenchement à la position de course libre,
des seconds moyens à ressort (18), qui sollicitent axialement le disque de commutation (14, 14'), de sorte que les entraîneurs (8) sont sollicités par le disque de commutation (14, 14') contre le manchon d'accouplement (22) et sont maintenus dans la position d'enclenchement pour la transmission du couple dans les premiers évidements (23),
**caractérisé en ce**
**qu'**il est prévu un agencement de butée (28, 28', 29, 29', 30, 30', 31, 31'), qui permet un transfert du disque de commutation (14, 14') de la position d'enclenchement dans la position de course libre dans un premier sens de rotation et empêche de le transférer dans un second sens de rotation.

2. Accouplement de limitation de couple selon la revendication 1,
**caractérisé en ce que**
l'agencement de butée présente une première butée (28, 28') et une seconde butée (29, 29'), qui peuvent être transférées l'une avec l'autre en appui.

3. Accouplement de limitation de couple selon la revendication 2,
**caractérisé en ce que**,
dans la position d'enclenchement, la première butée (28, 28') est en appui avec la seconde butée (29, 29').

4. Accouplement de limitation de couple selon l'une quelconque des revendications 1 à 3,
**caractérisé en ce que**,
dans la position d'enclenchement, les seconds évidements (34) sont disposés de façon décalée d'un premier angle (α) par rapport aux percements (7) dans le sens périphérique, et,
dans la position de roue libre, les seconds évidements (34) sont disposés de façon à coïncider avec les percements (7) dans le sens périphérique.

5. Accouplement de limitation de couple selon la revendication 4,
**caractérisé en ce que**
l'agencement de butée présente une troisième butée (30, 30') et une quatrième butée (31, 31'),
sachant que, dans la position d'enclenchement, la troisième butée (30, 30') est disposée de façon décalée sur le pourtour par rapport à la quatrième butée (31, 31') d'un second angle (β) qui correspond sensiblement au premier angle (α).

6. Accouplement de limitation de couple selon l'une quelconque des revendications 1 à 5,
**caractérisé en ce que**
la première butée (28, 28') est attribuée au moyeu d'accouplement (5) et la seconde butée (29, 29') est attribuée au disque de commutation (14, 14').

7. Accouplement de limitation de couple selon la revendication 6,
**caractérisé en ce que**
le disque de commutation (14, 14') présente la seconde butée (29, 29').

8. Accouplement de limitation de couple selon l'une quelconque des revendications 6 ou 7,
**caractérisé en ce que**
la première butée est présentée sous la forme d'une première surface de butée (28) et la seconde butée sous la forme d'une seconde surface de butée (29), et **en ce qu'**il est prévu un ressort d'ajustage (9) qui est relié de façon solidaire en rotation au moyeu d'accouplement (5), le ressort d'ajustage (9) présentant la première surface de butée (28),
le disque de commutation (14) présentant sur une surface périphérique intérieure (17) un évidement (13) qui est limité par la seconde surface de butée (29).

9. Accouplement de limitation de couple selon la revendication 6,
**caractérisé en ce**
**qu'**une bague de pression (16') est prévue entre les seconds moyens à ressort (18) et le disque de commutation (14') qui est reliée de façon solidaire en rotation au moyeu d'accouplement (5),
la bague de pression (16') présentant la première butée (28').

10. Accouplement de limitation de couple selon la revendication 9,
**caractérisé en ce que**
la première butée est conçue sous la forme d'une première surface de butée (28') et la seconde butée sous la forme d'une seconde surface de butée (29'), et **en ce que** la bague de pression (16') présente une saillie (12') radiale sur laquelle la première surface de butée (28') est disposée, et
**en ce que** le disque de commutation (14') présente une saillie (21') axiale sur laquelle la seconde surface de butée (29') est disposée.
